# EUROPEAN PATENT APPLICATION

(11) **EP 0 796 890 A1**
(43) Date of publication of application: **24.09.1997**
(21) Application number: 97102959.0
(22) Date of filing: 24.02.1997
(51) Int. Cl.: C08K 5/47, C08K 5/39, C08L 33/08, C08L 21/00

(54) **Vulcanizable acrylic rubber composition**

(30) Priority: 18.03.1996 US 617409
(71) Applicant: ENICHEM S.p.A., 20124 Milano (IT)
(72) Inventor: Barnes, Carol, Houston, Texas 77025 (US)
(74) Representative: Gennari, Marco

(57) **Abstract**

The present invention relates to a method and composition for vulcanizing acrylic gum containing active halogen groups, wherein a mixture of 2,5-dimercapto-1,3,4-thiadiazole and a metal dialkyldithiocarbamate is added thereto, and the mixture is heated. The method advantageously requires no post cure.

## Description

This invention relates generally to a non-post-cure vulcanizing composition. More particularly, the present invention relates to a non-post-cure polyacrylate vulcanizing system. The invention further relates to a method of producing elastomers from the claimed non-post-cure vulcanizing composition.

Polyacrylate (ACM) elastomers are noted for their excellent heat and oil resistance. Acrylic rubber is used extensively in automobiles for under-the-hood applications including seals, such as transmission lip seals, shaft seals, bonded piston seals valve seals and oil seals, gaskets such as transmission, engine and locomotive gaskets, spark plug bushings, hoses such as air conditioning hoses, clutch plates, O-rings, conveyor belts, packings and the like.

However, polyacrylic elastomers are difficult to vulcanize even when they contain vulcanization sites such as active halogen or epoxy groups. Generally, to achieve optimum properties the molded parts must be post-cured in an oven to complete the curing process. Conventional curing agents (curates) are too slow for complete vulcanization to take place during the short cycle times used in production. If the processing temperature is increased to accelerate the cure and reduce cure time during molding, the elastomers cure prematurely (scorch) which is not desired for proper molding. The post-cure process is not desirable because it involves capital expense, and additional labor and energy costs.

Faster cures can increase production rates by reducing part cycle time. U.S. Pat. No. 3,622,547 disclosed a vulcanizable acrylic composition having and improved cure rate. It was said to provide a vulcanizable composition containing an acrylic elastomer having active halogen groups an improved state of cure and improved aging properties. This was accomplished by providing a vulcanizable composition containing an acrylic gum and a combination of a dithiocarbamic acid derivative and trithiocyanuric acid in an amount sufficient to vulcanize the composition.

U.S. Patent No. 4,128,510 disclosed a method for crosslinking a halogen-containing polymer by heating the polymer in the presence of a basic material and a derivative of 2,5-dimercapto-1,3,4-thiazole. The resulting vulcanizates are reportedly of increased strength and insolubility in organic solvents.

U.S. Patent No. 4,399,262 disclosed an acrylate rubber composition, wherein dual cure site acrylate rubbers having both carboxyl and active halogen groups are reacted with 2,3-dimercapto-1,3,4-thiadiazole and a Group IB, IIB, IVA, VA or VIA metal compound of a tetraalkyl thiuram sulfide to provide acrylate rubbers with improved scorch/cure rate balance.

U.S. Patent No. 4,405,758 disclosed dual cure site acrylate elastomers containing both active halogen and carboxyl groups, which are compounded with a combination of sodium stearate, a tetraalkyl thiuram sulfide or a Group IB, IIB, IVA, VA or VIA metal compound thereof to provide acrylate rubbers with improved scorch/cure rate balance.

U.S. Patent No. 4,434,274 disclosed dual cure site acrylate elastomers containing both active halogen and carboxyl groups, which are compounded with a combination of 2,5-dimercapto-1,3,4-thiadiazole, a Group IVA metal oxide or salt thereof and a tetraalkyl thiuram sulfide to provide acrylate rubbers with improved scorch/cure rate balance. This system requires a post cure to get better compression set and tensile properties.

However, the above-described methods cannot very well meet the two critical needs that a non-post-cure system requires, namely a fast cure rate and good scorch protection. It is well known in the art that scorch protection is probably the most important factor in elastomer production. Scorchiness leads to premature curing of the elastomer, causing poor flow of the gums from which the elastomers are produced and consequent clogging of the molding apparatus. Reducing the processing temperature and/or lowering the curative content in the gums do improve scorch protection but also lower the cure rate to unacceptably low levels.

A post-curing operation adds cost to the final product but is often needed to develop optimum physical properties such as high tensile and low compression set. Elimination of post-curing operations reduces environmental concerns, production cost and increases production rates. Non-post-cure curative systems are described in the following publications: R.M. Montagne, "Advances in acrylic elastomer cure technology" Rubber World, Volume 199, No. 3, 20 (1988); E. Lauretti et al., "Enichem Acrylic Elastomers", PRI Rubber Conference (1984); and L.M. Centric et al., Detroit Rubber Group Technical Meeting, Detroit, MI (Oct. 13, 1988).

U.S. Patent No. 5,196,463 disclosed a method for the vulcanization of acrylic gums having active halogen groups, by adding thereto a mixture of trithiocyanic acid (TCY), a metal salt of an aliphatic organic acid and a metal dialkyl dithiocarbamate, and applying heat. The resulting vulcanizate does not require conventional oven post-cure processing.

U.S. Patent No. 5,334,683 disclosed acrylate polymer elastomers containing an acrylic ester unit with improved oil resistance and low temperature resistance.

Although fast cure systems based on TCY have been developed which require no post cures, these systems have several short-coming such as low scorch safety, poor bin stability, moisture/heat sensitivity and high price compared to conventional sulfur-donor type systems.

In view of the aforementioned deficiencies attendant with the prior art methods of curing acrylic rubber, and the compositions therefor, it is clear that there exists a need in the art for vulcanization technology which allows for increased production rate, minimizes the cost of starting compounds, reduces scrape rates, improves product performance (mechanical/aging), improves compound shelf-life (bin stability), and improves the processing properties (high scorch resistance/good mixing and flow characteristics).

Accordingly, one object of this invention is to provide a novel vulcanizable composition.

A further object of the invention is to provide a novel vulcanizable composition which provides, upon vulcanization, a product with improved properties such as tensile properties, pliable surface texture, improved elongation, improved tear properties, increased bin stability, increased shelf life, improved mold release properties and better aging properties.

The inventors have surprisingly found that a composition comprising the following:
(a) an acrylic gum having active halogen groups;
(b) a 2,5-dimercapto-1,3,4-thiadiazole or a derivative thereof; and
(c) a metal dialkyl dithiocarbamate;
   wherein the 2,5-dimercapto-1,3,4-thiadiazole or derivative thereof is present in an amount from about 0.1 parts per hundred (phr) to about 20 phr relative to the amount of said acrylic gum, and the metal dialkyl dithiocarbamate is present at from about 0.5 phr to 20 phr with respect to 100 phr of said acrylic gum, provides a vulcanized product with these desirable qualities.

Another object of the invention is to provide a novel composition useful in the vulcanization of acrylic gums.

Such a composition includes:
(1) from about 0.1 to about 20 phr of a 2,5-dimercapto-1,3,4-thiadiazole or a derivative thereof; and
(2) from about 0.5 to about 20 phr of a metal dialkyl dithiocarbamate.

Yet another object of the invention is to provide a method for the vulcanization of acrylic gums.

Such a method includes:
(I) mixing the acrylic gum with a first mixture comprising
   (1) from about 0.1 to about 20 phr of the first mixture of 2,5-dimercapto-1,3,4-thiadiazole or its derivatives;
   (2) from about 0.5 to about 20 phr of the first mixture of a metal dialkyl dithiocarbamate,
      wherein the of 2,5-dimercapto-1,3,4-thiadiazole or its derivatives is present in an amount of from about 0.1 to about 20 phr relative to the acrylic gum, to obtain a second mixture; and
(II) heating the second mixture for a length of time sufficient to vulcanize the second mixture.

Still another object of the invention is to provide a composition produced by the vulcanization method of the invention.

With the foregoing and other objects, advantages and features of the invention that will become hereinafter apparent, the nature of the invention may be more clearly understood by reference to the following detailed description of the preferred embodiments of the invention and to the appended claims.

As understood in the art, components (b) and (c) are often referred to as curatives, curative modifiers and accelerators, or more generically, vulcanizing agents.

The present invention contemplates broadly all vulcanizable compositions containing an acrylic gum (a) having active halogen groups, including those elastomers disclosed, for example, in U.S. Pat. Nos. 3,201,373, 3,312,677, 4,128,510, 4,288,576, 4,399,262, 4,434,274, 4,405,758, 5,196,463 and 5,334,683, all of which are incorporated herein by reference in their entireties. More specifically, the invention contemplates the use of acrylic gums prepared by polymerizing alkyl acrylates and alkoxyalkyl acrylates, for example ethyl acrylate, butyl acrylate, methoxyethyl acrylate and the like with a chlorine or bromine containing comonomer such as, for example, vinyl chloroacetate, or vinyl benzyl chloride. The acrylic gum is preferably a copolymer of at least one acrylic monomer and vinyl chloroacetate vinyl ether. The polyacrylates useful in the method of the invention preferably contain single cure sites.

The term "alkyl" in this document includes linear, as well as branched, and cyclic alkyl groups, with branched and cyclic alkyl groups being provided for when the alkyl group contains at least 3 carbon atoms.

The acrylate rubbers may contain from about 40% to about 98% by weight, based upon the weight of the polymer, of an acrylic ester of the formula 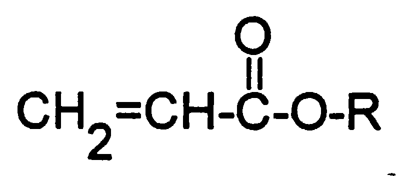 wherein R is an alkyl radical containing 1 to 18 carbon atoms, an alkoxyalkyl or alkylthioalkyl radical containing a total of 2 to about 12 carbon atoms, or a cyanolakyl radical containing 2 to about 12 carbon atoms. The alkyl structure can be primary, secondary, or tertiary including cyclic and non-cyclic. Examples of such acrylates are methyl acrylate, ethyl acrylate, propyl acrylate, n-butyl acrylate, isobutyl acrylate, n-pentyl acrylate, isoamyl acrylate, n-hexyl acrylate, 2-methyl-pentyl acrylate, n-octyl acrylate, 2-ethylhexyl acrylate, n-decyl acrylate, n-dodecyl acrylate, n-octadecyl acrylate, and the like; methoxymethyl acrylate, methoxyethyl acrylate, ethoxyethyl acrylate, butoxyethyl acrylate, ethoxypropyl acrylate; methylthioethylacrylate, hexylthioethylacrylate, and the like; and alpha and beta -cyanoethyl acrylate, alpha, beta and gamma -cyanopropyl acrylate, cyanobutyl acrylate, cyanohexyl acrylate, cyanooctyl acrylate, and the like. Mixtures of two or more monomers and/or types of acrylate monomers may be employed.

Preferably, the rubbers contain from about 65% to about 98% by weight of acrylates of the formula wherein R is an alkyl radical containing 1 to about 10 carbon atoms or an alkoxyalkyl radical containing 2 to about 8 carbon atoms. Examples of the more preferred acrylates are ethyl acrylate, propyl acrylate, n-butyl acrylate, hexyl acrylate, 2-ethylhexyl acrylate, octyl acrylate, and the like; and methoxyethyl acrylate, ethoxyethyl acrylate, and the like. Both an alkyl acrylate and an alkoxyalkyl acrylate can be used.

The rubbers contain from about 0.1% to about 30% by weight of an active halogen-containing monomer. The halogen groups can be chlorine, bromine or iodine. These monomers are generally (1) halogen-containing vinylene hydrocarbons and (2) halogen-containing vinyl monomers having the halogen group at least two carbon atoms removed from an oxygen atom(s). Examples of (1) are vinyl benzyl chloride, vinyl benzyl bromide, 2-chloromethyl-5-norbornene, 2-bromomethyl-5-norbornene, 2-beta-chloroethyl-5-norbornene, and the like; (2) are characterized by having ether (-O-), ketone 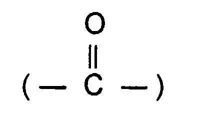 or ester 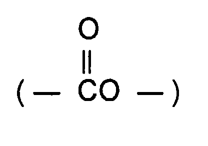 structures in the monomer where the halogen group is at least 2 carbon atoms and up to 6 or more carbon atoms removed from an oxygen atom. Examples of these monomers are halogen-containing vinyl esters such as vinyl chloroacetate, cyclol chloroacetate, vinyl bromoacetate, allyl chloroacetate, vinyl 3-chloropropionate, vinyl 4-chlorobutyrate, vinyl 4-bromobutyrate, and the like; halogen-containing acrylates such as 2-chloroethyl acrylate, 3-chloropropyl acrylate, 4 -chlorobutyl acrylate, 2-chloroethyl methacrylate, 2-bromoethyl acrylate, 2-iodoethyl acrylate, 4-chloro-2-butenyl acrylate, 2-chloroacetoxyethyl acrylate and methacrylate, and the like; halogen-containing vinyl ethers such as 2-chloroethyl vinyl ether; halogen-containing vinyl ketones such as chloromethyl vinyl ketone, 2-chloroethyl vinyl ketone, and the like; and 2-chloroacetoxymethyl-5-norbornene, 2-(alpha, beta-dichloropropionylmethyl)-5-norbornene, and the like.

More preferably, the rubber contains from about 0.2% to about 15% by weight of the active halogen-containing monomer. At this level, the halogen content is from about 0.1% to about 5% by weight of the rubber. Due to availability and cost, the chlorine-containing monomers are preferred. Examples of the more preferred monomers are vinyl chloroacetate, allyl chloroacetate, 2-chloroethyl acrylate, 2-chloroethyl vinyl ether, 3-chloropropyl acrylate, cyclol chloroacetate, chloromethyl vinyl ketone, vinyl benzyl chloride, 2-chloromethyl-5-norbornene, 2-chloroacetoxyethyl acrylate and methacrylate, and 2-chloroacetoxymethyl-5-norbornene.

Preferably used in the practice of the present invention are polyacrylate gums containing from about 0.1 wt% to about 2.0 wt% of active halogen atoms, which are most preferably chlorine atoms.

In addition to providing a cure system for acrylic rubber (ACM), the present invention relates to a cure system for nitrile rubber, polychloroprene, chlorobutyl ethylene, propylene diene monomer (EPDM), styrene butadiene rubber (SBR) and butadiene rubber (BR). The acrylic rubber may also be blended with chlorinated polyethylene rubber (CPE).

Component (b) useful in the practice of the present invention is 2,5-dimercapto-1,3,4-thiadiazole or its derivatives. The mono- and dicarboxylic acid esters of 2,5-dimercapto-1,3,4-thiadiazole are known compounds and have been reported in the literature as light stabilizers (See U.S. Pat. No. 2,736,729) lubricant additives (See U.S. Pat. No. 2,760,933), and as crosslinking agents (U.S. Patent No. 4,128,510). The use of 2,5-dimercapto-1,3,4-thiadiazole as a curing agent for certain unsaturated polymers has been reported in British Pat. No. 974,915. However, 2,5-dimercapto-1,3,4-thiadiazole tends to crosslink halogen-containing polymers prematurely (i.e., scorch) during processing, as during milling or storage prior to press-curing. Moreover, this agent can cause undesirable sticking to rolls and other processing equipment during mixing and curing. The derivatives employed in this invention are more soluble in, and so can be blended more effectively with the polymer to be crosslinked.

It was previously found that saturated and unsaturated halogen-containing polymers can be readily crosslinked without sticking or premature curing (i.e., scorching) when certain derivatives of 2,5-dimercapto-1,3,4-thiadiazole are used in the presence of certain basic materials in normal vulcanization procedures. The present invention further includes a metal dialkyldithiocarbamate, such that no post-curing is necessary, and the products are economical, have improved scorch safety, improved bin stability, and decreased moisture/heat sensitivity. The presence of a basic material is not required for the present invention.

Accordingly this invention relates to a process of crosslinking saturated and unsaturated halogen-containing polymers with a derivative of 2,5-dimercapto-1,3,4-thiadiazole represented by one of the following formulas: 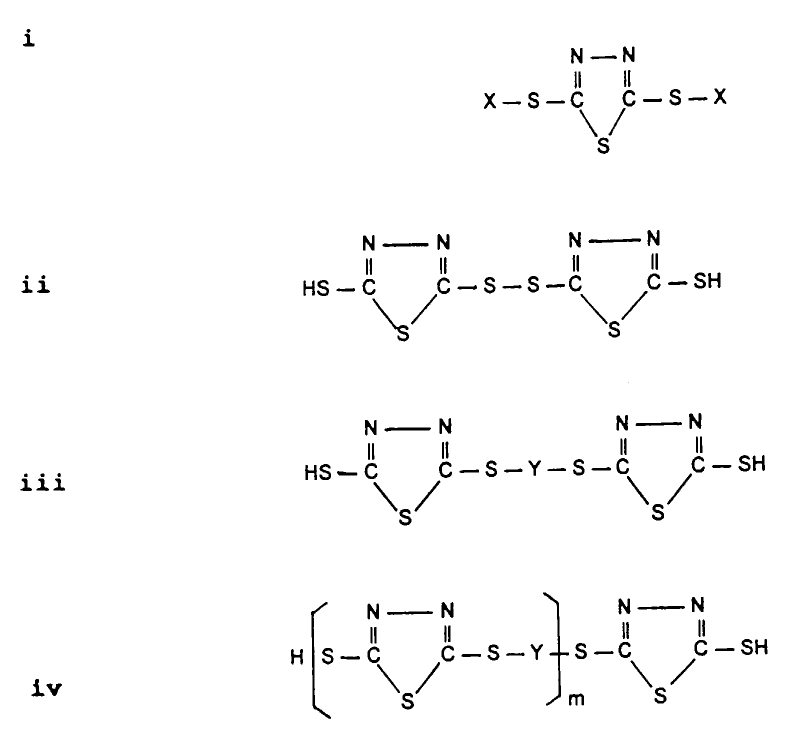 wherein X is hydrogen, -CRR'OH, -(CH₂-CH₂-0)ₙH, 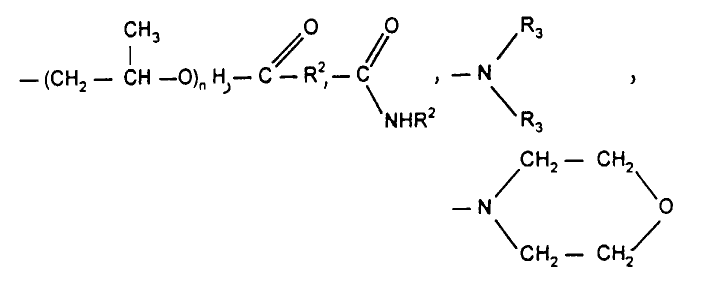 or
where m is 2 to 10; n is 1 to 5; R and R' are hydrogen, alkyl groups containing 1-8 carbon atoms, or aryl, alkaryl or aralkyl groups containing 6 to 8 carbon atoms; R₂ is an alkyl group containing 1-17 carbon atoms, an aryl group with one or two rings, an alkaryl group containing 7-14 carbon atoms, an aralkyl group containing 7-8 carbon atoms or a cyclohexyl group; and R₃ is an alkyl group containing 1-8 carbon atoms; X' can be the same as X with the exception of hydrogen; and
wherein Y is zinc, lead, -CRR'-, -S-, 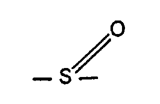 -SO₂-, -SS-, 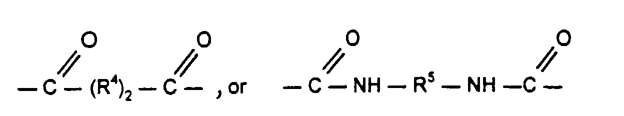 where R₄ is an alkylene or alkenylene group containing 1-8 carbon atoms, or a cycloalkylene, arylene or alkarylene group containing 6-8 carbon atoms; z is 0 or 1; and R₅ is an alkylene group containing 2-8 carbon atoms or a phenylene or methylphenylene or methylenediphenylene group.

It will be understood that the unsaturation in the above formulas is believed to exist in a state of equilibrium between two isomeric forms as follows: 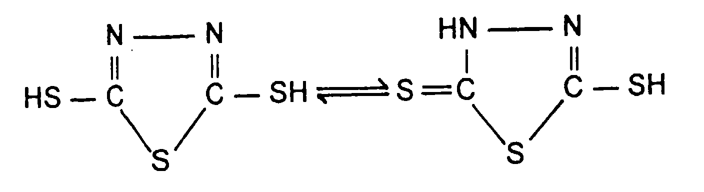 Typical of the derivatives of 2,5-dimercapto-1,3,4-thiadiazole which can be used in the process of this invention are 5-mercapto-2-S-methylol-1,3,4-thiadiazole, 5-mercapto-1,3,4-thiadiazolyl-2-thiomethyl hemiacetal, 5-mercapto-1,3,4-thiadiazolyl-2-thiooctyl hemiacetal, 5-mercapto-1,3,4-thiadiazolyl-2-thiophenyl hemiacetal, 5-mercapco-1,3,4-thiadiazolyl-2-thiophenethyl hemiacetal, 5-mercapto-1,3,4-thiadiazolyl-2-thio-o,m, or p-ethylphenyl hemiacetal, 2-hydroxy-2-thio(5-mercapto-1,3,4-thiadiazolyl)propane, 2-hydroxy-3-methyl-2-thio (5-mercapto-1,3,4-thiadiazolyl) pentane, 2-hydroxy-2-thio(5-mercapto-1,3,4-thiadiazolyl) decane, 1-hydroxy-1-phenyl-1-thio(5-mercapto-1,3,4-thiadiazolyl) ethane, 1-hydroxy-1-o,m, or p-tolyl-1-thio(5-mercapto-1,3,4-thiadiazolyl) ethane, 9-hydroxy-9-thio(5-mercapto-1,3,4-thiadiazolyl) heptadecane, 2-thio(5-mercapto-1,3,4-thiadiazolyl) ethanol, 14-thio(5-mercapto-1,3,4-thiadiazolyl)-3,6,9,12-tetraoxatetrad ecanol, 3-thio(5-mercapto-1,3,4-thiadiazolyl)propan-2-ol, 15-thio(5-mercapto-1,3,4-thiadiazolyl)-5,8,11,14-tetramethyl-4 ,7,10,13- tetraoxapentadecan-2-ol, 5-mercapto-1,3,4-thiadiazolyl-2-thiolacetate, 5-mercapto-1,3,4-thiadiazolyl-2-thiolstearate, 5-mercapto-1,3,4-thiadiazolyl-2-thiolbenzoate, 5-mercapto-1,3,4-thiadiazolyl-2-thiol-1-naphthoate, 5-mercapto-1,3,4-thiadiazolyl-2-thiol-phenylacetate, 5-mercapto-1,3,4-thiadiazolyl-2-thiolcinnamate, 5-mercapto-1,3,4-thiadiazolyl-2-thiol-p-toluate, 5-mercapto-1,3,4-thiadiazolyl-2-thiolcyclohexylcarboxylate, 5-mercapto-1,3,4-thiadiazolyl-2-N-methyl thiocarbamate, 5-mercapto-1,3,4-thiadiazolyl-2-N-eta-octyl thiocarbamate, 5-mercapto-1,3,4-thiadiazolyl-2-N-phenyl thiocarbamate, N,N-dimethyl-2(5-mercapto-1,3,4-thiadiazolyl) sulfenamide, N,N-di eta-octyl-2(5-mercapto-1,3,4-thiadiazolyl) sulfenamide, N-t-butyl-2(5-mercapto-1,3,4-thiadiazolyl) sulfenamide, N-cyclohexyl-2(5-mercapto-1,3,4-thiadiazolyl) sulfenamide, N-oxydiethylene-2(5-mercapto-1,3,4-thiadiazolyl) sulfenamide, 5-mercapto-1,3,4-thiadiazolyl-2-disulfide, zinc(II) 5-mercapto-1,3,4-thiadiazolyl-2-mercaptido, lead(II) 5-mercapto-1,3,4-thiadiazolyl-2-mercaptide, bis(5-mercapto-1,3,4-thiadiazolyl-2thio)methane, 1,1-bis(5-mercapto-1,3,4-thiadiazolyl-2-thio)ethane, 1,1-bis(5-mercapto-1,3,4-thiadiazolyl-2-thio)nonane, alpha , alpha-bis(5-mercapto-1,3,4-thiadiazolyl-2-thio)-toluene, 1,1-bis(5-mercapto-1,3,4-thiadiazolyl-2-thio)-3-phenyl propane, 1,1-bis(5-mercapto-1,3,4-thadiaiolyl-2-thio)-2-phenyl ethane, 2,2-bis(5-mercapto-1,3,4-thiadiazolyl-2-thio)propane, 9,9-bis(5-mercapto-1,3,4-thiadiazolyl-2-thio)heptadecane, 1,1-bis (5-mercapto-1,3,4-thiadiazolyl-2-thio)-2-phenyl ethane, bis(5-mercapto-1,3,4-thiadiazolyl-2) dithiocarbonate, 5-mercapto-1,3,4-thiadiazolyl-2-tetrasulfide, 5-mercapto-1,3,4-thiadiazolyl-2-trisulfide, bis (5-mercapto-1,3,4-thiadiazolyl-2-thio)sulfoxide, bis(5-mercapto-1,3,4-thiadiazolyl-2-thio)sulfone, bis(5-mercapto-1,3,4-thiadiazolyl)-2-thioloxalate, bis(5-mercapto-1,3,4-thiadiazolyl)-2-thiolmalonate, bis(5-mercapto-1,3,4-thiadiazolyl)-2-thiolsebacate, bis(5-mercapto-1,3,4-thiadiazolyl)-2-thiolfumarate, bis-(5-mercapto-1,3,4-thiadiazolyl)-2-thiolcyclohexyl-1,4-dica rboxylate, bis(5-mercapto-1,3,4-thiadiazolyl)-2-thiolterephthalate, N,N'-ethylene-bis(5-mercapto-1,3,4-thiadiazolyl)-2-thiocarbamate, N,N'-1,8-octylene-bis(5-mercapto-1,3,4-thiadiazolyl)-2-thiocarbamate, N,N'-phenylene-bis(5-mercapto-1,3,4-thiadiazolyl)-2-thiocarbam ate, N,N'-toluene-2,4-bis(5-mercapto-1,3,4-thiadiazolyl)-2-thiocarbamate, methylene-p,p'-N,N'-phenylene-bis(5-mercapto-1,3,4-thiadiazoly l) thiocarbamate, 2,5-bis-S-methylol-1,3,4-thiadiazole, 2,5-dithio-bis(1-hydroxy-1-ethyl)- 1,3,4-thiadazole, 2,5-dithio-bis(1-hydroxy-1-nonyl)-1,3,4-thiadiazole, 2,5-dithio-bis(2-hydroxy-2-propyl)-1,3,4-thiadiazole, 2,5-dithio-bis(9-hydroxy-9-heptadecyl)-1,3,4-thiadiazole, 2,5-bis(15-thio-5,8,11,14-tetramethyl-4,7,10,13-tetraoxapentad ecan-2-ol)-1,3,4- thiadiazole, 1,3,4-thiadiazolyl-2,5-dithiol-stearate, 1,3,4-thiadiazolyl-2,5-bis(N-methylthiocarbamate), 2,5-bis(N,N'-t-butyl)-1,3,4-thiadiazolyl disulfenamide, 2,5-bis(N,N'-cyclohexyl)-1,3,4-thiadiazolyl disulfenamide, 2,5,-bis(N,N-dimethyl)-1,3,4-thiadiazolyl disulfenamide, 2,5-bis(N,N-dioctyl)-1,3,4-thiadiazolyl disulfenamide, 2,5-bis(N-oxydiethylene)-1,3,4-thiadiazolyl disfulfenamide, and those derivatives of 2,5-dimercapto-1,3,4-thiadiazole having the following formulas:

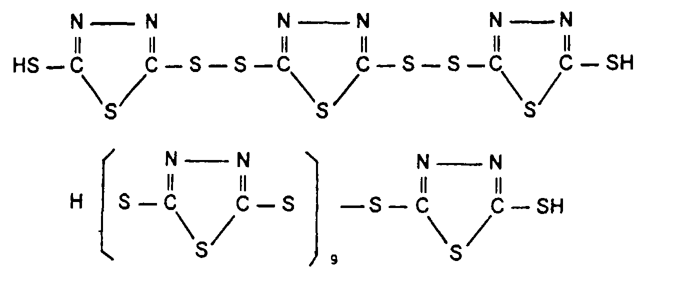

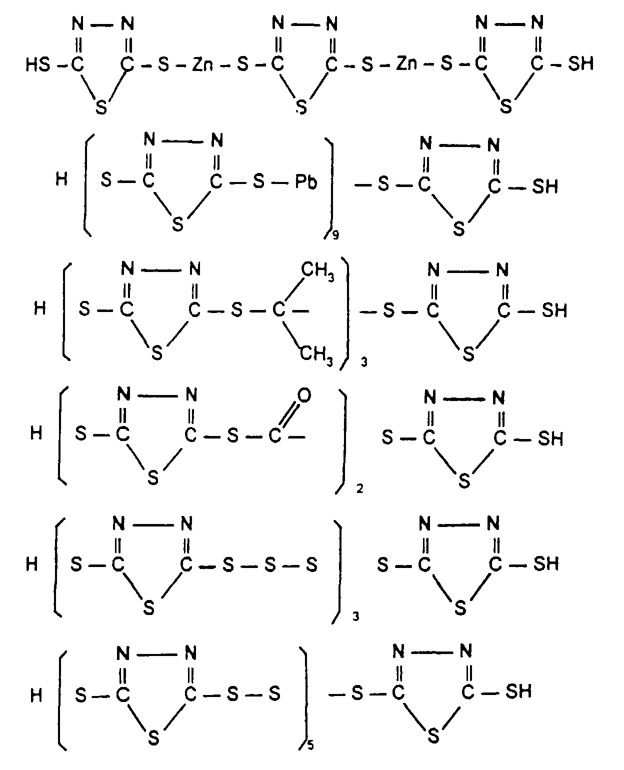

The monobenzoate and dibenzoate derivatives are particularly advantageous because they are easily prepared, easily handled, non-irritating, non-odorous, and particularly effective in the cross-linking.

Derivatives of dimercaptothiadiazole (DMTD) can be used as crosslinking agents for chlorine-containing polymers such as chlorinated polyethylene (CPE), epichlorohydrin, polychloroprene and chlorobutyl. Several curing agents of this type are commercially available for the curing of chlorinated synthetic polymers. They include PB(ECHO-S)-100(66%) (Elastochem Inc.), ECHO MPS (35%) (Hercules Inc.), ECHO A (100%) (Hercules Inc.), Rhenocure TDD (65%) (Rhine Chime), Vanax 829 (100%) (R.T. Vanderbilt), Vanchem DMTD (100%) (R.T. Vanderbilt) and RD882-A (R.T. Vanderbilt).

The metal dialkyl dithiocarbamates (b) useful in the practice of the present invention are those of the formula 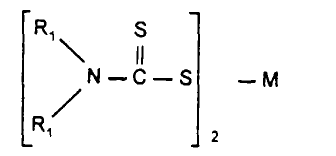 wherein M is a divalent metal ion; and R₁ and R₂, which may or may not be different, each is an aliphatic radical, an alicyclic radical, or an aryl-substituted alkyl radical.

Preferably, M is a divalent metal ion selected from the group consisting of zinc, copper, cadmium, lead, bismuth, iron and selenium or tellurium ions. Most preferably, M is a zinc or selenium ion, preferably zinc.

Preferably, R₁ and R₂, which may or may not be different, are selected from the group consisting of aliphatic or acyclic radicals having from 1 to about 12 carbon atoms, alicyclic radicals having from 5 to about 8 carbon atoms, a benzyl radical and a pentamethylene radical. Most preferably, R₁ and R₂ are selected from the group consisting of alkyl radicals having from 2 to about 4 carbon atoms and a pentamethylene radical.

The metal dithiocarbamates useful in the practice of the present invention therefore include zinc dimethyldithiocarbamate, zinc diethyldithiocarbamate, zinc dibutyldithiocarbamate, zinc dibenzyldithiocarbamate, zinc pentamethylene dithiocarbamate, zinc diamyldithiocarbamate, copper dimethyldithiocarbamate, lead diamyldithiocarbamate, lead dimethyldithiocarbamate, bismuth dimethyldithiocarbamate, cadmium diamyldithiocarbamate, cadmium diethyldithiocarbamate, selenium diethyldithiocarbamate, selenium dimethyldithiocarbamate, tellurium diethyldithiocarbamate and the like. It will be appreciated by one skilled in the art that the selection of the metal dithiocarbamate will depend on the solubility of the particular metal dithiocarbamate in the composition to be vulcanized.

Metal salts of aliphatic organic acids may optionally be added to the vulcanizable composition. Such aliphatic organic acids useful in the practice of the present invention are mono-, di- and tri- aluminum salts of organic acids. There include salts of both long chain acids, such as fatty acids (stearic acid, oleic acid, etc.) and short chain acids (acetic acid, butyric acid, hexanoic acid, etc). Preferably, a metal salt of a stearate is used, for example calcium stearate, magnesium stearate, aluminum stearate, barium stearate, sodium stearate, lithium stearate or TE88XL (Technical Processing, Inc., Patterson, NJ) or a mixture thereof. Preferably, the salt of the aliphatic organic acid is magnesium distearate or calcium distearate. The metal salt of the aliphatic acid is preferably present at 0.05-4.0 phr, more preferably 0.5-1.5 phr.

The components (b) and (c) are typically used in the practice of the present invention, as set forth in the amounts below:
Component (b): about 0.1-20 phr, more preferably 0.5-10 phr, most preferably 1.5-3.5 phr, relative to 100 parts acrylic gum;
Component (c): about 0.5-20 phr, more preferably 1-10 phr, most preferably 1.5-4 phr, relative to 100 parts acrylic gum.

The vulcanizable compositions provided by the present invention may also include carbon blacks, fillers, antioxidants, polymeric binders and similar well known additives.

The compositions of the present invention may be prepared by conventional compounding techniques. For instance, the various components may be mixed together on a two-roll mill or in a Banbury mixer. Through use of the present invention a compounded mixture of components (a)-(c) including optional fillers and other additives (d), exhibit very stable properties when stored at room temperature. Further, upon vulcanization, good cure rates coupled with excellent scorch protection are exhibited. Finally, following vulcanization, the elastomers produced exhibit excellent scorch, good bin stability and long term aging in a variety of environments.

For convenient application and better effectiveness of the curative (components (b-c)), it is preferred that components b-c be premixed before compounding with the gum (a) and any fillers or other additives (d). Premixing may be accomplished with the components in a powdered form, or more conveniently, they may be premixed with an inert type of "binder" into a free flowing, dust-free bead form or in a rubbery masterbatch form. The binder or inert additive may be carbon black, a filler, an antioxidant, or a polymeric binder. Binding dusty powders into beads or producing other masterbatch forms for industrial applications for convenience as well as health concerns is well known in the industry and does not require elaboration herein.

The composition may further comprise a functionalized clay, a coupling agent, or a mixture thereof.

After components (a)-(c) are mixed, the mixture is heated to a temperature of 100-200°C, preferably about 150-200°C, more preferably 190-200°C. The heating is performed for approximately 1-20 minutes, preferably about 2 to 6 minutes, more preferably about 3 to 4 minutes.

Having generally described this invention, a further understanding can be obtained by reference to certain specific examples which are provided herein for purposes of illustration only and are not intended to be limiting unless otherwise specified.

### EXAMPLES

### Example 1

PB(ECHO-S)-100 is a monobenzoyl derivative of 2,5-dimercapto-1,3,4-thiadiazole. It is available on a carrier as a 66% active material. ECHO MPS(35 %) is a moisture free product produced by Hercules designed to improve cure reproducibility of the ECHO S system. ECHO A is 100% active material that is not moisture resistant. Rhenocure TDD (Rheichemie) contains as its active material ECHO-S on a Chlorinated Polyethylene carrier. Vanax 829 (mercaptothiadiazole, R.T. Vanderbilt) is a 100% active material. RD882-A (R.T. Vanderbilt) is for use in curing chlorinated polymers and must be used with another ingredient called RD882-B (R.T. Vanderbilt).

A screening of the ECHO-S curative was performed to determine if it showed vulcanization activity in the non-post-cure low chlorine-containing acrylic rubber. During initial evaluation, very good crosslinking activity at low ECHO-S loadings was observed utilizing Europrene 1803 polyacrylate. Data from this initial investigation is outlined in Table I.

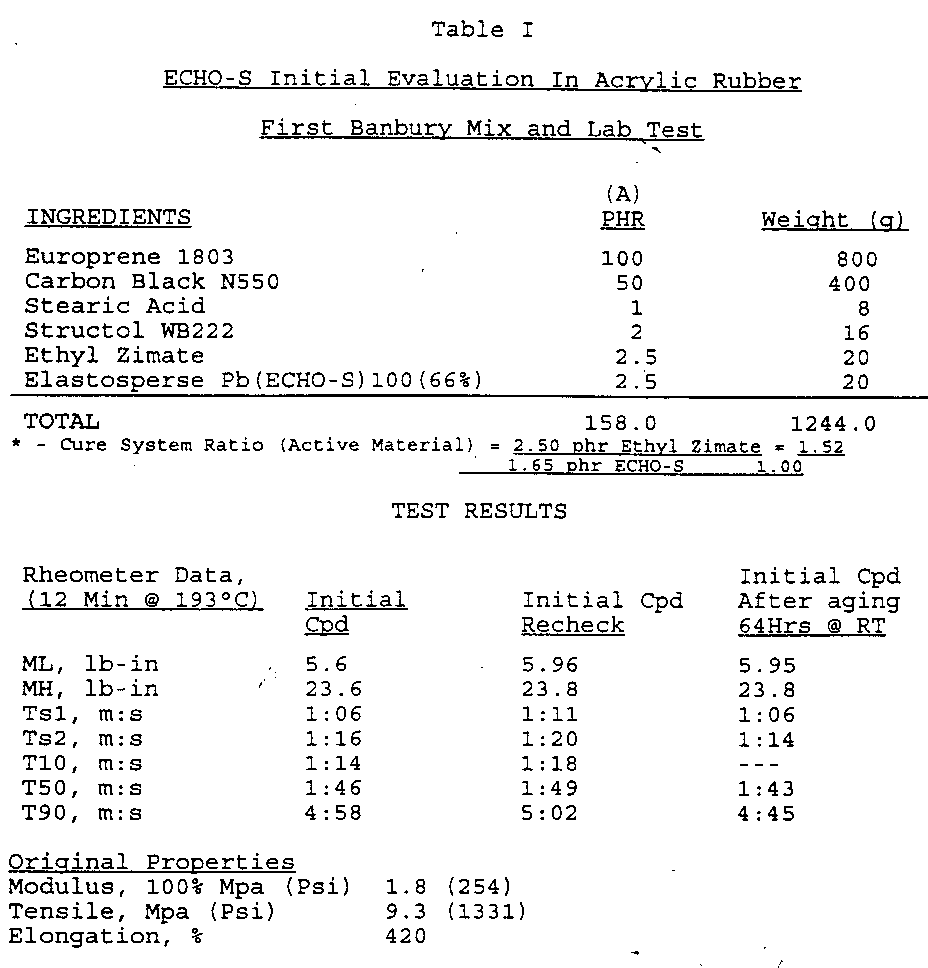

The data demonstrate that the initial accelerator-curing agent ratio of 1.5/1 appears to be a workable level for producing acrylic rubber vulcanizates with good tensile, hardness and elongation properties. ML values (5.6 lb-in) on the initial uncured experimental compound indicate it is a soft processable stock suitable for injection molding applications.

An MH value of 24 lb-in on the experimental compound indicates ECHO-S is capable of building a significant crosslink density in acrylic rubber. Ts1 and Ts2 values of 1:06 and 1:16 respectively indicate ECHO-S is a fast curing, very active curing agent. T50 values of approximately 100 seconds show ECHO-S to be fast enough for use in injection molding applications where quick cures are desirable. T90 values show this ECHO-S compound to complete its cure in 5 minutes or less without cure package optimization or assistance from accelerator promoters. A recheck of the initial compound cure properties confirmed results produced by the initial compound rheometer.

The initial experimental compound was aged 3 days (approximately 64 hours) without a significant change in ML, Ts2, etc. These results indicate that ECHO-S-cure packages show very good bin stability and may offer shelf-life improvements over EZCure and TCY cure packages. Original properties show ECHO-S produces vulcanizates similar in properties to EZCure and TCY. Modulus appears to be lower for ECHO-S compared to EZCure. A significant increase in elongation was observed with the ECHO-S compound compared to a typical expected value from the EZCure system.

### Example 2

A thorough more detailed investigation was initiated to compare all three cure packages. A first project was designed to compare the ECHO-S curative (monobenzoate derivative of a 2,5-dimercapto-1,3,4-thiadiazole) to other cure systems that utilized mercaptan functionality for crosslinking acrylic rubber. These cure systems are EZCURE 2X and TCY-75. Both cure packages utilize trithiocyanuric Acid (which is a trifunctional mercaptan) to effect curing in acrylic rubber. Both cure systems are expensive and must be used in combination with accelerators and retarders.

Data from this comparison study is outlined in Table II.

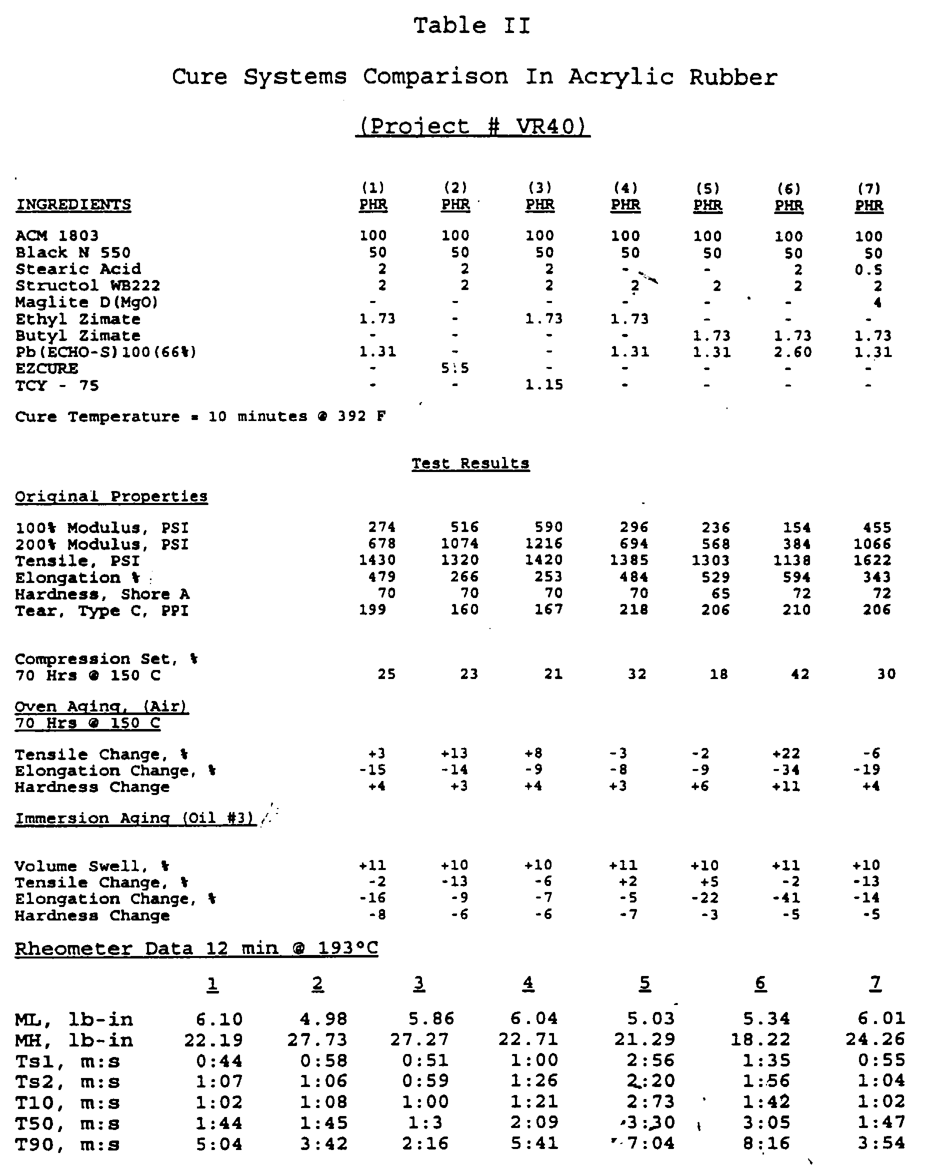

These results demonstrate that ECHO-S shows a 8-10% improvement in tensile over EZCURE. ECHO-S cured compounds exhibit a lower modulus and have a softer more pliable surface texture. ECHO-S shows an 80% increase in elongation. Shore A hardness properties are similar for all curatives.

ECHO-S shows a 24% improvement in tear properties compared to EZCURE and a 19% improvement over TCY-75. ECHO-S significantly improves mold release properties of acrylic rubber. Acrylic rubber compounds are easier to remove from the banbury after mixing when ECHO-S is used as the curing agent. Also compression molded specimens are easier to remove from the compression press when ASTM slabs (6 inch by 6 inch) are produced. Compression set properties are similar for all curatives. Oven aging properties show tensile change is significantly less for ECHO-S, followed by TCY-75 and EZCURE respectively. Elongation change is low and similar to EZCURE but slightly worse than TCY-75. Hardness change for all three cure systems are similar.

Oil aging properties show volume swell values are similar for all cure systems. ECHO-S shows the lowest tensile change followed by TCY and EZCURE respectively. While elongation changes for all cure systems are low, TCY exhibits a slightly better elongation change in oil than both EZCURE and ECHO-S. Hardness change for all cure packages are low and similar.

Removing stearic acid from the compound gives higher tear and compression set. Stearic acid is suspected of retarding the thiadiazole cure system and tear and compression set values indicate this to be true (See compound # 4). A disadvantage of removing stearic acid is that it hurts processability. The compound is difficult to remove from the banbury when stearic acid is excluded from the compound.

Switching the accelerator from ethyl zimate to butyl zimate raises elongation properties significantly. Shore A hardness is reduced. All other properties are similar except for elongation change in ASTM Oil # 3. Elongation change as a result of using butyl zimate is significantly worse than for ethyl zimate (See Compound # 5). Increasing the ECHO-S level in the presence of stearic acid reduces modulus and tensile properties. Elongation properties go up but air and oil aging properties are significantly reduced.

The addition of magnesium oxide (MgO) to the ECHO-S cure system significantly increases physical properties of the cured vulcanizate without reducing oil and air aging properties (See compound # 7). Magnesium oxide increases tile reactivity of ECHO-S in acrylic rubber. It increases the basicity of the compound thus effecting rapid extraction of chlorine from the appending cure monomer sites. This can be seen when one compares compound # 1 and #7. The T90 is reduced from 5:04 m:s to 3:54 m:s. This indicates the compound reaches a state of maximum cure quicker when MgO is used as a cure activator.

Rheometer data from the comparison study is outlined in Table III. ML and MH values for ECHO-S recipes used in this study show compounds can be produced that are easy to process and build a significant amount of crosslink density. Ts2 values show that ECHO-S compounds can cure-up fast and cure times are suitable for injection molding applications.

**Table III**

| Shelf-Life Study Recipe # VR40-7 Containing MgO At 4 phr | | | |
|---|---|---|---|
| | Initial | 1 Day | 1 Week |
| ML, lb-in | 6.01 | 13.77 | 20.58 |
| MH, lb-in | 24.26 | 33.41 | 28.16 |
| Ts1 m:s | 0:55 | 0:48 | 1:42 |
| Ts2 m:s | 1:04 | 0:57 | 1:59 |
| T10 m:s | --- | --- | --- |
| T50 m:s | 1:47 | 1:38 | 2:28 |
| T90 m:s | 3:54 | 3:31 | 5:50 |

### Example 3

### SHELF- LIFE STUDY

As outlined above, when basic material such as magnesium oxide is used as a cure activator, it significantly increase reactivity of the cure system.

Table IV demonstrates that metal oxides such as calcium oxide and magnesium oxides increase the pH of the ECHO-S compound and reduce processing safety (Ts2, Compounds A and B). pH differences influence the reactivity of ECHO-S. Organometallic compounds such as calcium stearate do not reduce processing safety but actually improve Ts2 values (compound 2). Mooney Scorch tests show the same general trends for Compounds A and B. After 24 hours aging reactivity of ECHO-S in the presence of metal oxides causes the compound to become more scorchy. Magnesium oxide, calcium oxide and calcium stearate build a similar 100 and 200% modulus. Calcium stearate builds higher tensile strength than magnesium oxide or calcium oxide, demonstrates better (higher) elongation properties, and demonstrates better set properties.

Table V demonstrates that bin stability or shelf life of practical ECHO-S compounds are greater than 2 months (56 days). Ts2 and T90 values after 2 months are similar to initial values. A similar performance is observed in a different study using butylzimate (Table VA).

Block compounds also show good bin stability for the same reasons as the compound in Table VA (Table VI).

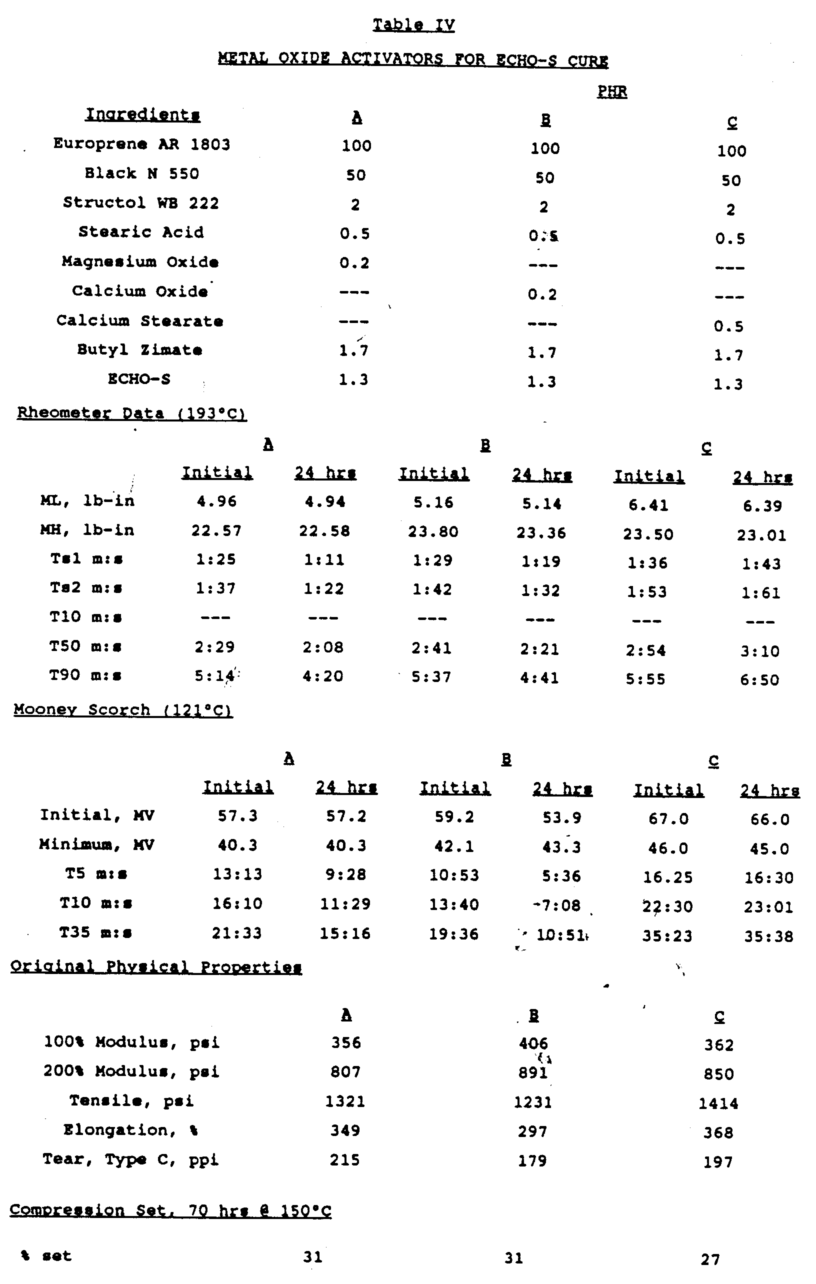

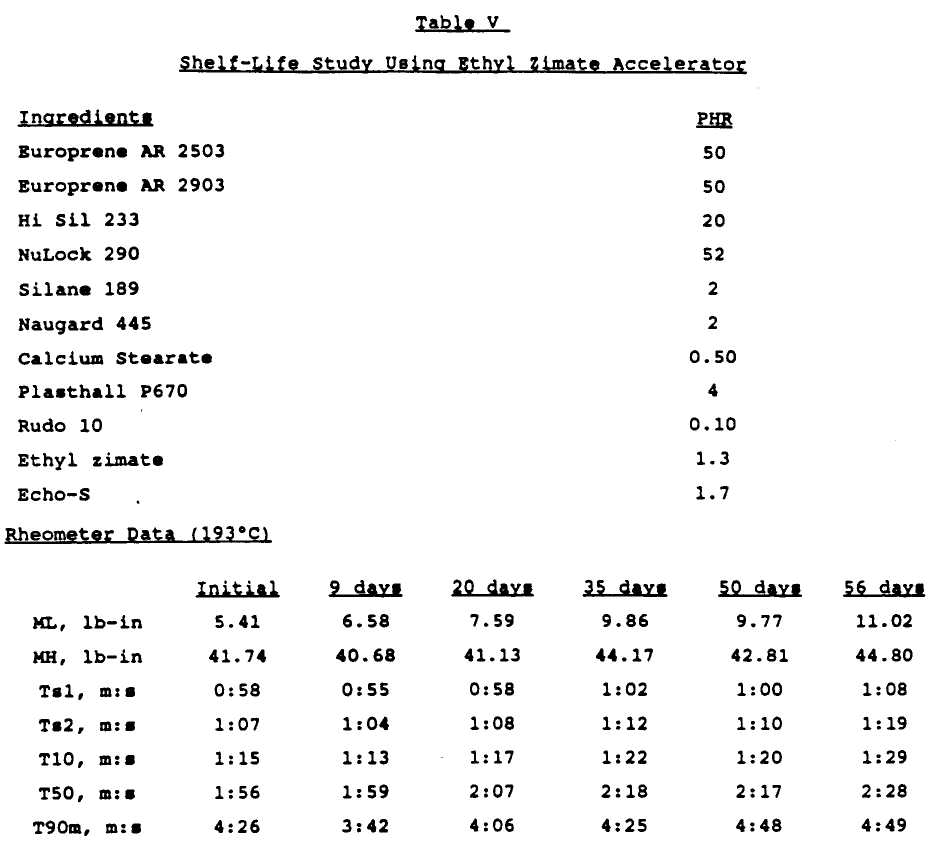

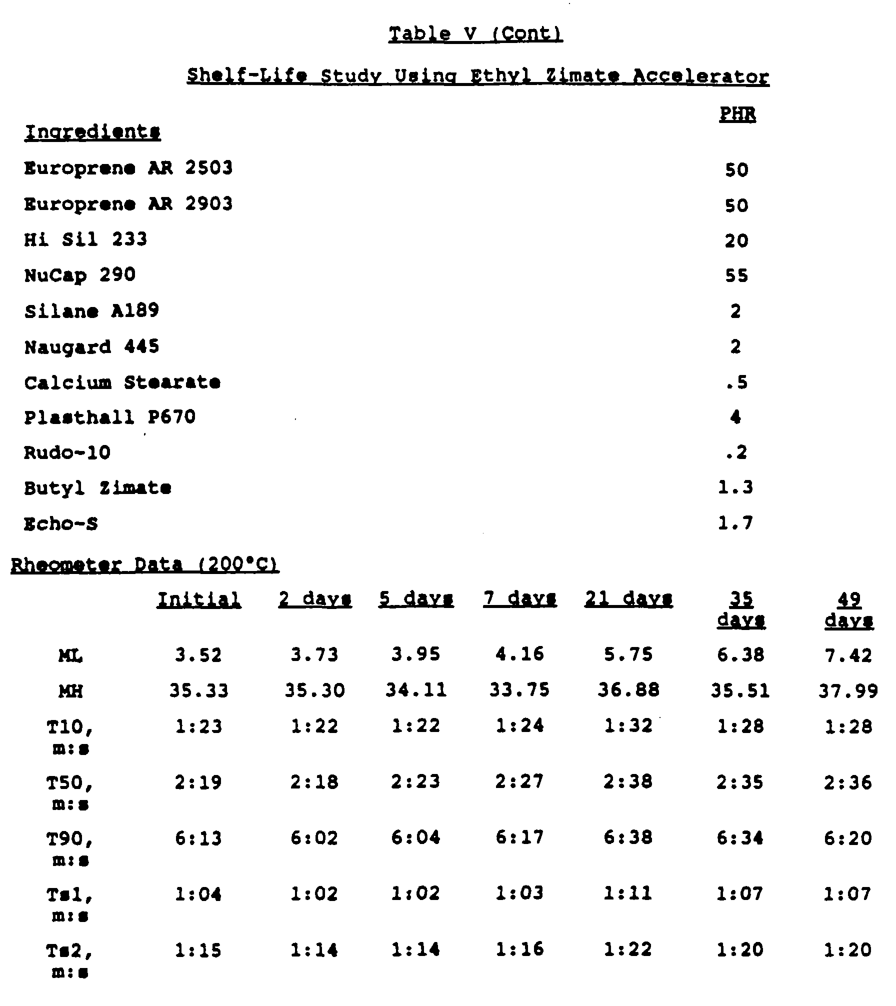

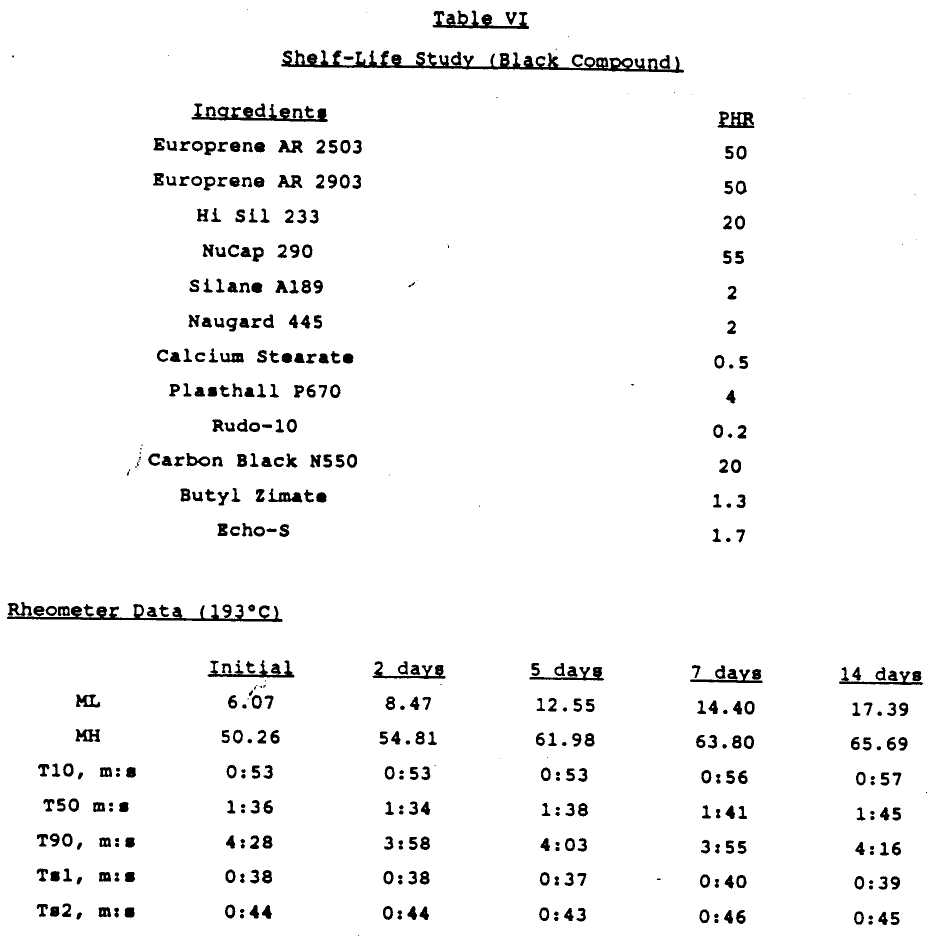

Having now fully described the invention, it will be apparent to one of ordinary skill in the art that many changes and modifications can be made thereto without departing from the spirit or scope of the invention as set forth herein.

## Claims

1. A composition obtained by vulcanizing a mixture comprising
(a) an acrylic gum having active halogen groups;
(b) a 2,5-dimercapto-1,3,4-thiadiazole having the formula: 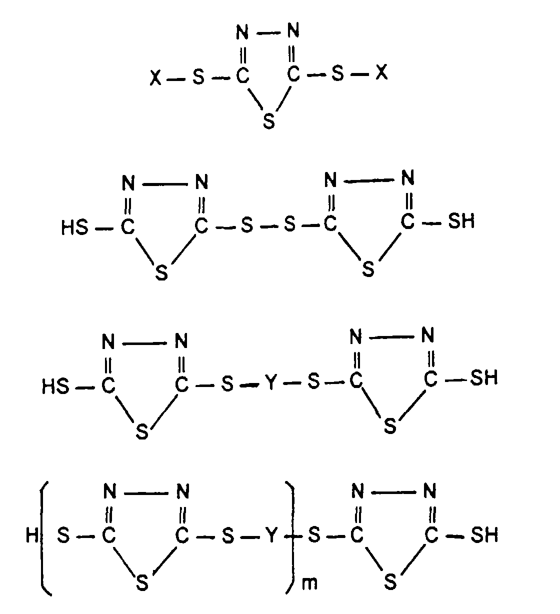 wherein X is hydrogen, -CRR'OH, -(CH₂-CH₂-O)ₙH, 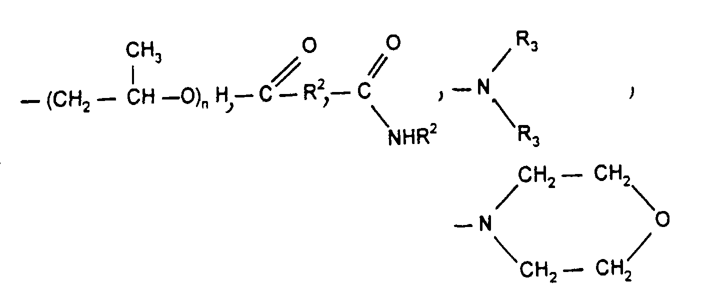 or
where m is 2 to 10; n is 1 to 5; R and R' are hydrogen, alkyl groups containing 1-8 carbon atoms, or aryl, alkaryl or aralkyl groups containing 6 to 8 carbon atoms; R₂ is an alkyl group containing 1-17 carbon atoms, an aryl group with one or two rings, an alkaryl group containing 7-14 carbon atoms, an aralkyl group containing 7-8 carbon atoms or a cyclohexyl group; and R₃ is an alkyl group containing 1-8 carbon atoms; X' can be the same as X with the exception of hydrogen; and
wherein Y is zinc, lead, -CRR'-, -S-, 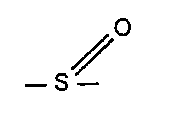 -SO₂-, -SS-, 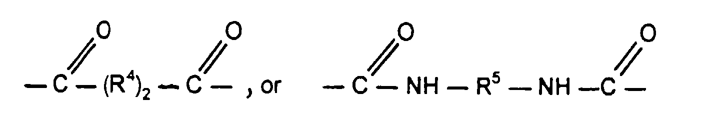 where R₄ is an alkylene or alkenylene group containing 1-8 carbon atoms, or a cycloalkylene, arylene or alkarylene group containing 6-8 carbon atoms; z is 0 or 1; and R₅ is an alkylene group containing 2-8 carbon atoms or a phenylene or methylphenylene or methylenediphenylene group;
and
(c) a metal dialkyl dithiocarbamate;
wherein said 2,5-dimercapto-1,3,4-thiadiazole or derivative thereof is present in an amount from about 0.1 to 20 phr relative to the amount of said acrylic gum, and said metal dialkyl dithiocarbamate is present at about 0.5 phr to about 20 phr relative to said acrylic gum.

2. A vulcanizable composition comprising
(a) an acrylic gum having active halogen groups;
(b) a 2,5-dimercapto-1,3,4-thiadiazole having the formula: 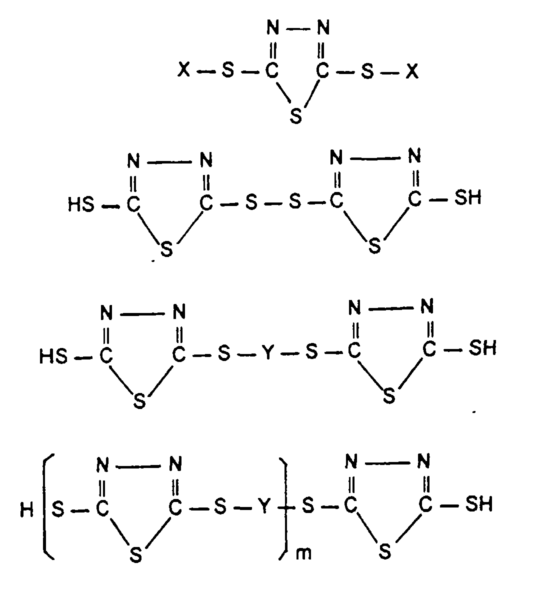 wherein X is hydrogen, -CRR',OH, -(CH₂-CH₂-O)ₙH 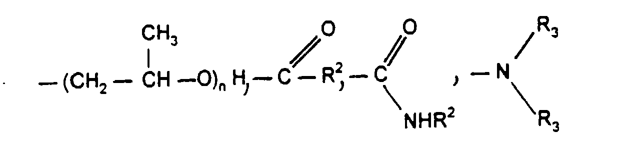 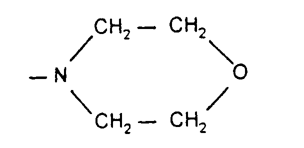 where m is 2 to 10; n is 1 to 5; R and R' are hydrogen, alkyl groups containing 1-8 carbon atoms, or aryl, alkaryl or aralkyl groups containing 6 to 8 carbon atoms; R₂ is an alkyl group containing 1-17 carbon atoms, an aryl group with one or two rings, an alkaryl group containing 7-14 carbon atoms, an aralkyl group containing 7-8 carbon atoms or a cyclohexyl group; and R₃ is an alkyl group containing 1-8 carbon atoms; X' can be the same as X with the exception of hydrogen; and
wherein Y is zinc, lead, -CRR'-, -S-, 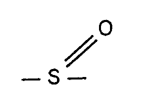 -SO₂-, -SS-, 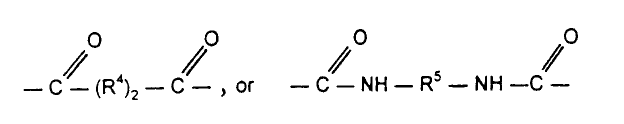 where R₄ is an alkylene or alkenylene group containing 1-8 carbon atoms, or a cycloalkylene, arylene or alkarylene group containing 6-8 carbon atoms; z is 0 or 1; and R₅ is an alkylene group containing 2-8 carbon atoms or a phenylene or methylphenylene or methylenediphenylene group;
and
(c) a metal dialkyl dithiocarbamate;
wherein said 2,5-dimercapto-1,3,4-thiadiazole or derivative thereof is present in an amount from about 0.1 to 20 phr relative to the amount of said acrylic gum, and said metal dialkyl dithiocarbamate is present at about 0.5 phr to about 20 phr relative to said acrylic gum.

3. The composition of Claim 1, wherein the metal dialkyl dithiocarbamate has the formula: 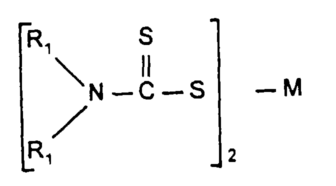 wherein M is a divalent metal ion, selenium or tellurium; and R₁ and R₂, each independently is an aliphatic radical, an alicyclic radical, or an aryl substituted alkyl radical.

4. The composition of Claim 3, wherein M is a divalent metal ion selected from the group consisting of zinc, copper, cadmium, lead, bismuth and iron ions.

5. The composition of Claim 3 wherein R₁ and R₂ are selected from the group consisting of acyclic aliphatic radicals having from 1 to about 12 carbon atoms, alicyclic radicals having from 5 to about 8 carbon atoms, a benzyl radical and a pentamethylene radical.

6. The composition of Claim 1, further comprising a metal salt of an aliphatic organic acid.

7. The composition of Claim 6, wherein the organic acid is stearic acid, oleic acid, acetic acid, butyric acid or hexanoic acid.

8. The composition of Claim 1, wherein the acrylic rubber is blended with chlorinated polyethylene rubber.

9. The composition of Claim 8, wherein the composition is vulcanized.

10. A composition obtained by the vulcanization of a mixture comprising
(a) nitrile rubber, polychloroprene, chlorobutyl ethylene propylene diene monomer (EPDM), styrene butadiene rubber (SBR) or butadiene rubber (BR) having active halogen groups;
(b) a 2,5-dimercapto-1,3,4-thiadiazole having the formula: 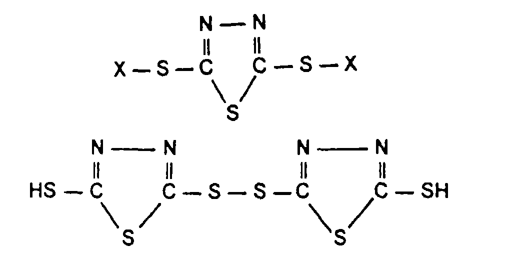 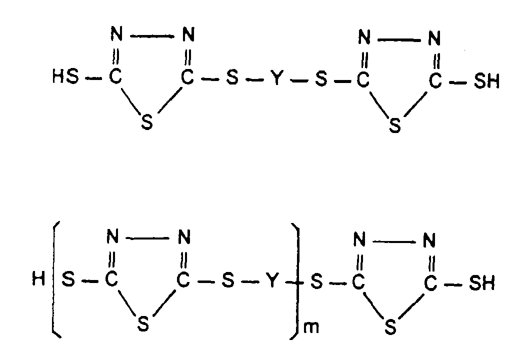 wherein X is hydrogen, -CRR'OH, -(CH₂-CH₂-O)ₙH, 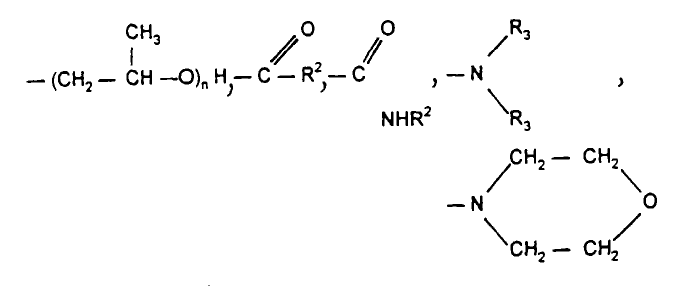 or
where m is 2 to 10; n is 1 to 5; R and R' are hydrogen, alkyl groups containing 1-8 carbon atoms, or aryl, alkaryl or aralkyl groups containing 6 to 8 carbon atoms; R₂ is an alkyl group containing 1-17 carbon atoms, an aryl group with one or two rings, an alkaryl group containing 7-14 carbon atoms, an aralkyl group containing 7-8 carbon atoms or a cyclohexyl group; and R₃ is an alkyl group containing 1-8 carbon atoms; X' can be the same as X with the exception of hydrogen; and wherein Y is zinc, lead, -CRR'-, -S-, 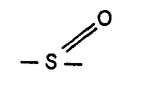 -SO₂-, -SS-, 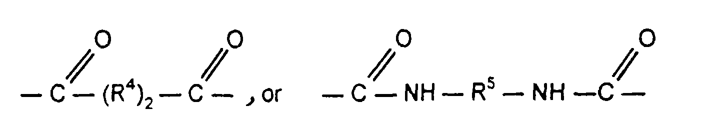 where R₄ is an alkylene or alkenylene group containing 1-8 carbon atoms, or a cycloalkylene, arylene or alkarylene group containing 6-8 carbon atoms; z is 0 or 1; and R₅ is an alkylene group containing 2-8 carbon atoms or a phenylene or methylphenylene or methylenediphenylene group;
and
(c) a metal dialkyl dithiocarbamate;
wherein said 2,5-dimercapto-1,3,4-thiadiazole or derivative thereof is present in an amount from about 0.1 to about 20 phr relative to the amount of said acrylic gum, and said metal dialkyl dithiocarbamate is present at about 0.5 to about 20 phr relative to the amount of said acrylic gum.

11. A vulcanizable composition comprising
(a) nitrile rubber, polychloroprene, chlorobutyl ethylene propylene diene monomer (EPDM) styrene butadiene rubber (SBR) or butadiene rubber (BR) having active halogen groups;
(b) a 2,5-dimercapto-1,3,4-thiadiazole having the formula: 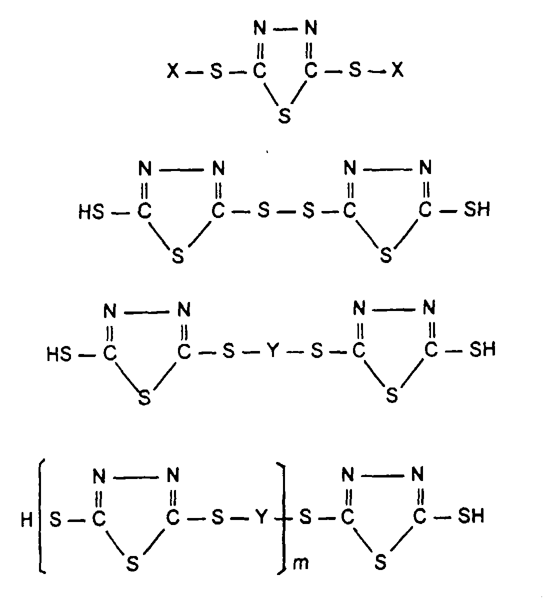 wherein X is hydrogen, -CRR'OH, -(CH₂-CH₂-O)ₙH, 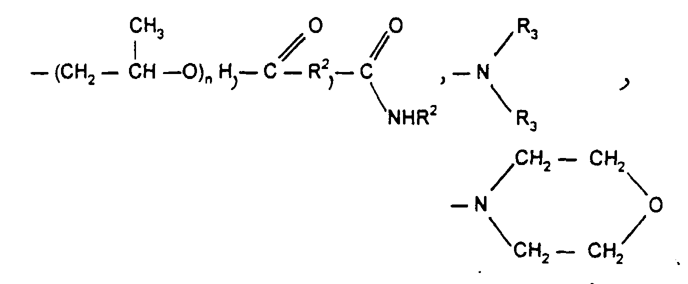 or
where m is 2 to 10; n is 1 to 5; R and R' are hydrogen, alkyl groups containing 1-8 carbon atoms, or aryl, alkaryl or aralkyl groups containing 6 to 8 carbon atoms; R₂ is an alkyl group containing 1-17 carbon atoms, an aryl group with one or two rings, an alkaryl group containing 7-14 carbon atoms, an aralkyl group containing 7-8 carbon atoms or a cyclohexyl group; and R₃ is an alkyl group containing 1-8 carbon atoms; X' can be the same as X with the exception of hydrogen; and
wherein Y is zinc, lead, -CRR'-, -S-, 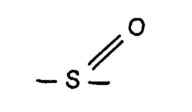 -SO₂-, -SS-, 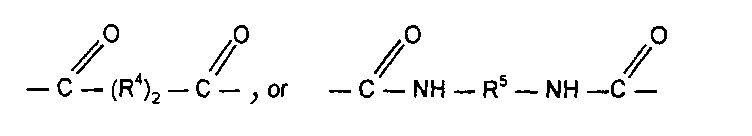 where R₄ is an alkylene or alkenylene group containing 1-8 carbon atoms, or a cycloalkylene, arylene or alkarylene group containing 6-8 carbon atoms; z is 0 or 1; and R₅ is an alkylene group containing 2-8 carbon atoms or a phenylene or methylphenylene or methylenediphenylene group;
and
(c) a metal dialkyl dithiocarbamate;
wherein said 2,5-dimercapto-1,3,4-thiadiazole or derivative thereof is present in an amount from about 0.1 to about 20 phr relative to the amount of said acrylic gum, and said metal dialkyl dithiocarbamate is present at about 0.5 to about 20 phr relative to the amount of said acrylic gum.

12. A composition useful in the vulcanization of acrylic gums having active halogen groups, comprising
(b) from about 0.1 to about 20 phr relative to the acrylic gum of a 2,5-dimercapto-1,3,4-thiadiazole having the formula: 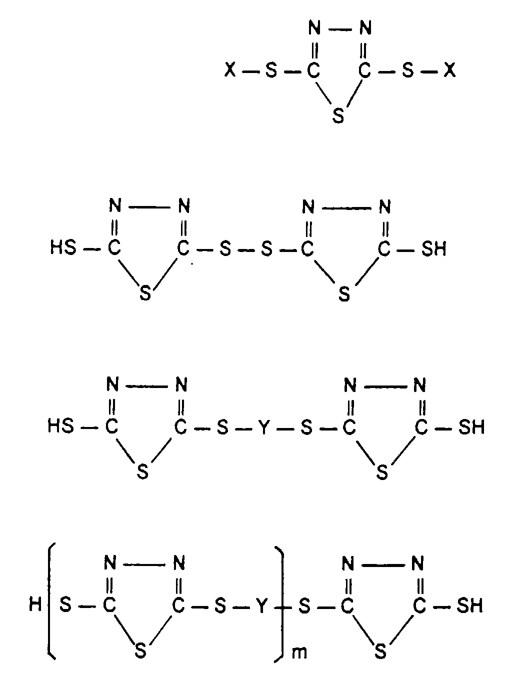 wherein X is hydrogen, -CRR'OH, -(CH₂-CH₂-O)ₙH, 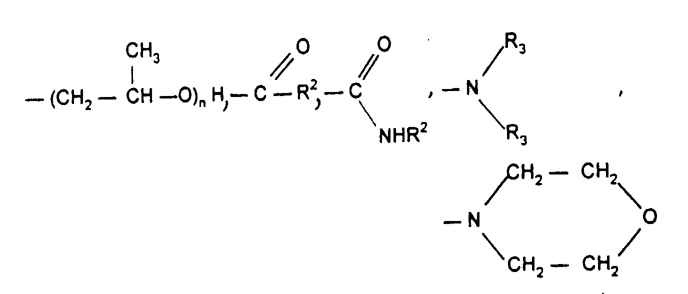 or
where m is 2 to 10; n is 1 to 5; R and R' are hydrogen, alkyl groups containing 1-8 carbon atoms, or aryl, alkaryl or aralkyl groups containing 6 to 8 carbon atoms; R₂ is an alkyl group containing 1-17 carbon atoms, an aryl group with one or two rings, an alkaryl group containing 7-14 carbon atoms, an aralkyl group containing 7-8 carbon atoms or a cyclohexyl group; and R₃ is an alkyl group containing 1-8 carbon atoms; X' can be the same as X with the exception of hydrogen; and
wherein Y is zinc, lead, -CRR'-, -S-, 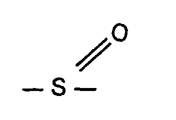 -SO₂-, -SS-, 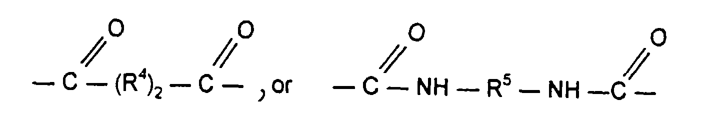 where R₄ is an alkylene or alkenylene group containing 1-8 carbon atoms, or a cycloalkylene, arylene or alkarylene group containing 6-8 carbon atoms; z is 0 or 1; and R₅ is an alkylene group containing 2-8 carbon atoms or a phenylene or methylphenylene or methylenediphenylene group;
and
(c) from about 0.5 to about 20 phr of a metal dialkyl dithiocarbamate relative to said acrylic gum.

13. The composition of Claim 1, further comprising a binder or an inert additive.

14. The composition of Claim 13, wherein said binder or inert additive is carbon black, a filler, an antioxidant, or a polymeric binder.

15. A method of vulcanizing an acrylic gum having active halogen groups, comprising
(I) mixing said acrylic gum with a first mixture comprising
(1) from about 0.1 to about 20 phr relative to said acrylic gum of 2,5-dimercapto-1,3,4-thiadiazole having the formula: 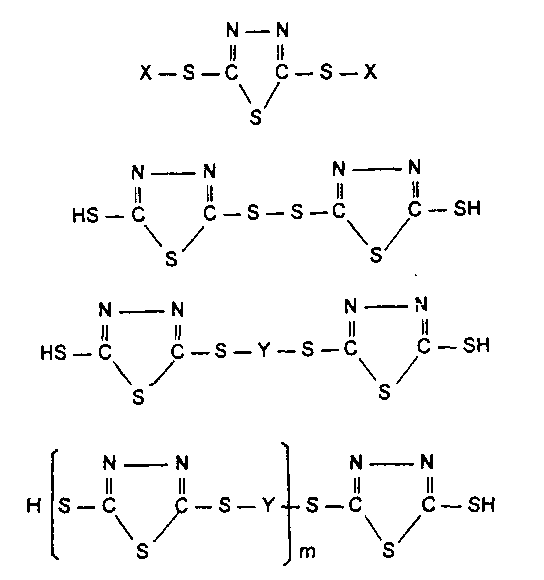 wherein X is hydrogen, -CRR'OH, -(CH₂-CH₂-O)ₙH, 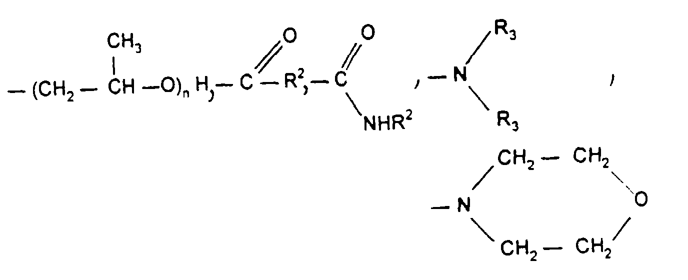 or
where m is 2 to 10; n is 1 to 5; R and R' are hydrogen, alkyl groups containing 1-8 carbon atoms, or aryl, alkaryl or aralkyl groups containing 6 to 8 carbon atoms; R₂ is an alkyl group containing 1-17 carbon atoms, an aryl group with one or two rings, an alkaryl group containing 7-14 carbon atoms, an aralkyl group containing 7-8 carbon atoms or a cyclohexyl group; and R₃ is an alkyl group containing 1-8 carbon atoms; X' can be the same as X with the exception of hydrogen; and
wherein Y is zinc, lead, -CRR'-, -S-, 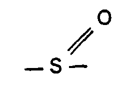 -SO₂-, -SS-, 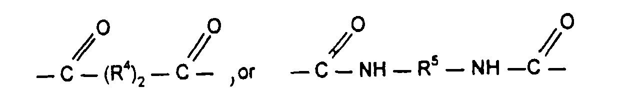 where R₄ is an alkylene or alkenylene group containing 1-8 carbon atoms, or a cycloalkylene, arylene or alkarylene group containing 6-8 carbon atoms; z is 0 or 1; and R₅ is an alkylene group containing 2-8 carbon atoms or a phenylene or methylphenylene or methylenediphenylene group;
(2) from about 0.5 to about 20 phr relative to said acrylic gum of said first mixture of a metal dialkyl dithiocarbamate,
wherein said of 2,5-dimercapto-1,3,4-thiadiazole or its derivatives is present in an amount of from about 0.1 to about 20 phr of said acrylic gum, to obtain a second mixture; and
(II) heating said second mixture for a length of time sufficient to vulcanize said second mixture.

16. The method of Claim 15, wherein the metal dialkyl dithiocarbamate is a compound of the formula 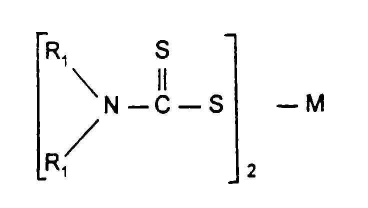 wherein M is a divalent metal ion, selenium or tellurium; and R₁ and R₂ each independently is an aliphatic radical, an alicyclic radical, or an aryl-substituted alkyl radical.

17. The method of Claim 15, wherein the acrylic rubber is blended with chlorinated polyethylene rubber.

18. A method of vulcanizing nitrile rubber, polychloroprene, chlorobutyl ethylene propylene diene monomer (EPDM), styrene butadiene rubber (SBR) or butadiene rubber (BR) having active halogen groups, comprising
(I) mixing said nitrile rubber, polychloroprene, chlorobutyl ethylene propylene diene monomer (EPDM), styrene butadiene rubber (SBR) or butadiene rubber with a first mixture comprising
(1) from about 0.1 phr to about 20 phr relative to said acrylic gum of 2,5-dimercapto-1,3,4-thiadiazole having the formula: 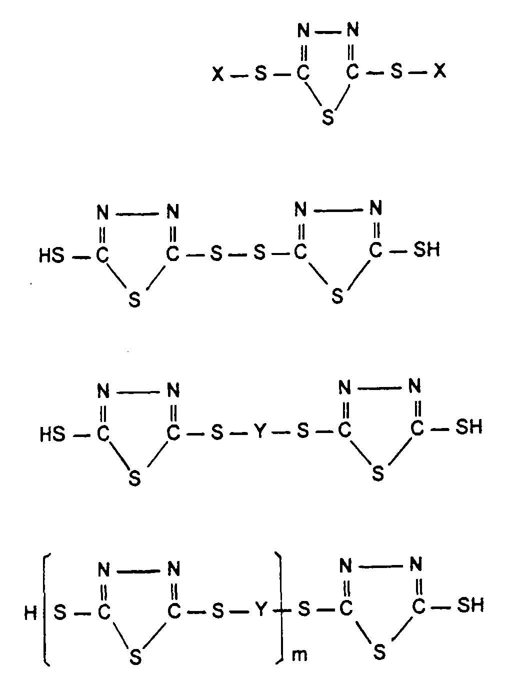 wherein X is hydrogen, -CRR'OH, -(CH₂-CH₂-O)ₙH, 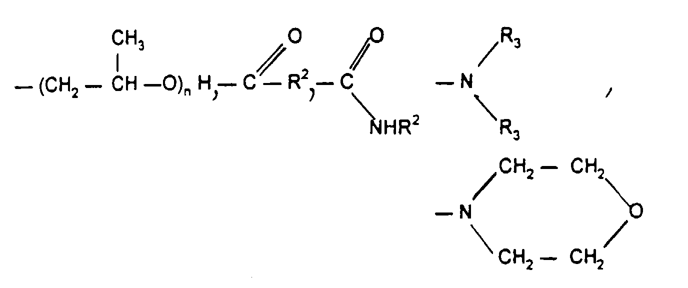 or
where m is 2 to 10; n is 1 to 5; R and R' are hydrogen, alkyl groups containing 1-8 carbon atoms, or aryl, alkaryl or aralkyl groups containing 6 to 8 carbon atoms; R₂ is an alkyl group containing 1-17 carbon atoms, an aryl group with one or two rings, an alkaryl group containing 7-14 carbon atoms, an aralkyl group containing 7-8 carbon atoms or a cyclohexyl group; and R₃ is an alkyl group containing 1-8 carbon atoms; X' can be the same as X with the exception of hydrogen; and
wherein Y is zinc, lead, -CRR'-, -S-, 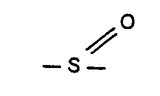 -SO₂-, -SS-, 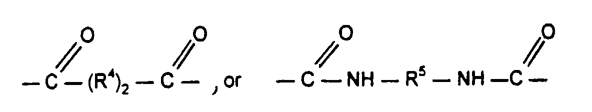 where R₄ is an alkylene or alkenylene group containing 1-8 carbon atoms, or a cycloalkylene, arylene or alkarylene group containing 6-8 carbon atoms; z is 0 or 1; and R₅ is an alkylene group containing 2-8 carbon atoms or a phenylene or methylphenylene or methylenediphenylene group;
(2) from about 0.5 to about 20 phr relative to said acrylic gum of said first mixture of a metal dialkyl dithiocarbamate, to obtain a second mixture; and
(II) heating said second mixture for a length of time sufficient to vulcanize said second mixture.

19. The vulcanizate produced in accordance with the method set forth in Claim 15.

20. The vulcanizate produced in accordance with the method set forth in Claim 17.

21. The vulcanizate produced in accordance with the method set forth in Claim 18.

22. The composition of Claim 1, further comprising a functionalized clay, a coupling agent or a mixture thereof.

23. The composition of Claim 8, further comprising a functionalized clay, a coupling agent or a mixture thereof.

24. The composition of Claim 10, further comprising a functionalized clay, a coupling agent or a mixture thereof.

25. A transmission lip seal, shaft seal, bonded piston seal, valve seal, oil seal, transmission gasket, engine gasket, locomotive gasket, spark plug bushing, air conditioning hose, clutch plate, O-ring, conveyor belt or packing comprising the composition of Claim 1.

26. A transmission lip seal, shaft seal, bonded piston seal, valve seal, oil seal, transmission gasket, engine gasket, locomotive gasket, spark plug bushing, air conditioning hose, clutch plate, O-ring, conveyor belt or packing comprising the composition of Claim 8.

27. A transmission lip seal, shaft seal, bonded piston seal, valve seal, oil seal, transmission gasket, engine gasket, locomotive gasket, spark plug bushing, air conditioning hose, clutch plate, O-ring, conveyor belt or packing comprising the composition of Claim 10.
